Europäisches Patentamt

European Patent Office

Office européen des brevets

(19)

(11) Publication number: **0 073 937**
**A1**

(12) **EUROPEAN PATENT APPLICATION**

(21) Application number: 82107120.6

(22) Date of filing: 06.08.82

(51) Int. Cl.³: **C 08 L 75/08**
C 08 J 9/00, C 08 G 18/38
C 08 G 18/67, C 08 K 5/52
C 08 K 3/38, C 08 K 3/22
C 08 K 3/28

(30) Priority: 26.08.81 GB 8125993

(43) Date of publication of application:
16.03.83 Bulletin 83/11

(84) Designated Contracting States:
BE DE FR NL

(71) Applicant: DUNLOP LIMITED
Dunlop House Ryder Street St. James's
London SW1Y 6PX(GB)

(72) Inventor: Keen, Christopher Victor
2 Dewsbury Drive Burntwood
Walsall Staffordshire(GB)

(72) Inventor: Marsh, Timothy John
21 Kenneth Court 173 Kennington Road
London SE11(GB)

(74) Representative: Waller, Roy Ernest Sykes et al,
Group Patent Department Dunlop Limited 2 Parade
Sutton Coldfield West Midlands B72 1PF(GB)

(54) Polyurethane foams.

(57) A flexible, flame-retardant polyetherurethane foam is
produced by reacting, under foam-forming conditions, a
polymeric polyol component (optionally including a non-
halogenated diol), an organic poly*iso*cyanate, an *iso*cyanate-
reactive additive to act as a flame-retardant, and one or more
non-*iso*cyanate-reactive compounds of phosphorus and nit-
rogen to act an intumescent agents.

Foams so made are resistant to severe fire sources,
including wooden cribs.

EP 0 073 937 A1

## POLYURETHANE FOAMS

This invention relates to polyurethane foams and in particular to flexible polyurethane foams which, on exposure to a flame, melt and char, thus protecting the foam from continued burning.

It is well known that many flexible polyetherurethane foams, e.g. high-resilient and Neomorphic foams, melt on exposure to a flame. This melting causes the effective withdrawal of the foam from the proximity of the flame. Although such behaviour reduces the hazard from small flame sources, melting of the foam gives rise to the formation of drips which may themselves ignite and create a further hazard. Moreover, such foams suffer from the additional disadvantage that they burn readily when subjected to a relatively severe fire source (such as burning paper or a wooden crib).

When a foam is ignited, molten material is formed and flammable gases are evolved. It is therefore desirable to increase the rate of melting of the foam (thus physically removing the foam from the fire source) as well as to suppress the evolution of flammable gases and to render the melt more thermally stable (thereby making the melt more difficult to ignite). In addition, any increase in the thermal stability of the melt should preferably be accompanied by the formation of a protective char layer on the outer surface of the melt (thus preventing any further combustion).

There have been many prior proposals with the object of attaining one or more of the above-mentioned desiderata. However, such prior proposals have generally involved the incorporation of one or more flame-retardant and/or intumescent additives into a conventional foam-forming mixture, or the post-treatment of an already-produced foam, at a level of addition which adversely affects the physical properties of the foam.

We have now found that, by means of a method according to the present invention, a polyetherurethane foam is produced which is not only substantially non- burning in the molten state but is also resistant to burning under relatively severe flammability conditions. Moreover, the method of the present invention produces a foam having acceptable physical properties.

Accordingly, the present invention provides a method for the production of a flexible polyurethane foam, the method comprising the reaction of a polymeric polyol component and an organic polyisocyanate under foam-forming conditions, in which the foam-forming reaction mixture also contains:

(a)     an isocyanate-reactive additive which remains in the finished foam and acts as a flame-retardant when the foam is exposed to a flame; and

(b)     one or more non-isocyanate-reactive compounds of phosphorus and nitrogen which, when the finished foam is melted by exposure to a flame, cause the melt to intumesce and char.

The present invention also provides a polyetherurethane foam made by the method described in the immediately-preceding paragraph.

The polymeric polyol component may include a non-halogenated diol, particularly when it is intended to produce a high-resilient foam product.

The additive (a) may be a halogenated unsaturated low molecular-weight diol (e.g. dibromobutene diol) or a triol. This additive can be used, in accordance with the present invention, to replace some or all of the non-halogenated diol conventionally included in the polymeric polyol component in the preparation of a high-resilient polyether foam. Preferably, this replacement is on a mole-for-mole basis and may amount to a replacement level of 100%.

The additive(s)(b) may be, for example, a halogenated phosphate ester (e.g. tetrakis(2-chloroethyl) ethylene diphosphate) and/or an ammonium polyphosphate.

Other additives, including flame-retardants known per se (e.g. hydrated alumina and borax) may be incorporated into the foam-forming reaction mixture. We

3.

have found that borax, together with a halogenated phosphate ester and an ammonium polyphosphate, shows a synergistic flame-retardant effect on the products.

The present invention will be illustrated by way of the following Example.

A "control" foam and a "modified" foam were made from the formulations shown in TABLE A (below):

TABLE A     (Quantities are parts by weight)

| Note (v.i.) | Ingredient | CONTROL FOAM | MODIFIED FOAM |
|---|---|---|---|
| (a) | Polyether polyol | 100 | 100 |
| (b) | Polyisocyanate | 53.42 | 53.4 |
| (c) | Metallic catalyst | 0.08 | 0.08 |
| (d) | Surface active agent | 0.3 | 0.3 |
| (e) | Amine catalyst | 0.3 | 1.1 |
| (f) | Alkanolamine catalyst/cross-linker | 4.27 (f1) | 1.42 (f2) |
| (g) | Foaming aid/combustion modifier | 2 | - |
| | Water | 2.91 | - |
| (h) | Halogenated diol | - | 5.23 |
| (i) | Halogenated phosphate ester | - | 10.7 |
| (j) | Ammonium polyphosphate | - | 4 |
| | Borax (decahydrate) | - | 0.5 |
| | Aqueous borax solution (0.02 M) | - | 2.91 |

In the following Notes, the words PROPYLAN, DESMODUR, DABCO, FYROL, THERMOLIN and PHOSCHEK are Registered Trade Marks.

Notes to TABLE A

(a)     A poly(oxyethylene) poly(oxypropylene) triol having a molecular weight of about 4500, available from Lankro Chemicals Limited as PROPYLAN M12.

(b)     Available from Bayer AG as DESMODUR MT-58 and believed to consist essentially of allophanate modified T.D.I.

(c)     A tin catalyst, available from M & T Chemicals as Tin Catalyst 125.

(d)     Available from Bayer AG as Stabiliser KS-43 and believed to consist essentially of a polysiloxane copolymer.

(e)     Available from Air Products Inc. as DABCO 33LV and believed to consist essentially of triethylene diamine (1,4-diazabicyclo - 2,2,2-octane).

(f1)    A 2:1 mixture of dipropylene glycol and diethanolamine.

(f2)    Diethanolamine.

(g)     Available from Stauffer Chemical Co. as FYROL EFF
        and believed to consist essentially of an oligomeric
        chloroalkyl phosphate.

(h)     Dibromobutene diol, available from Senn Chemicals
        (Switzerland).

(i)     Available from Olin Corporation as THERMOLIN 101 and
        believed to consist essentially of tetrakis(2-
        chloroethyl) ethylene diphosphate.

(j)     Available from Monsanto Limited as PHOSCHEK P-30.

        Both the "control" and the "modified" foams were
subjected to "Oxygen Index", "Burning Melt" and "Crib" tests.

OXYGEN INDEX TEST

        This is a measure of the oxygen concentration in
nitrogen at which a sample will sustain "candle-like"
burning.  It is carried out as described in ASTM
Specification D 2863-77 (equivalent to B.S.S. 2782 pt. I).

BURNING MELT TEST

        12.5g of each foam was melted into an aluminium cup
and heated from above (by means of a Bunsen flame) for 15
seconds.  The flame was removed and the time for the sample
to extinguish was noted.  The sample was heated for a
further 20 seconds and the extinguishing time again recorded.

        The results of the two above-mentioned tests are
shown in TABLE B (below):

TABLE B

| Test | Control Foam | Modified Foam |
|------|--------------|---------------|
| Oxygen Index | 23.5 | 28.5 |
| Burning Melt: 1st heating | 10 sec. | 11 sec. |
| 2nd heating | $\infty$ | 72 sec. |

CRIB TEST

        A piece of the modified foam having dimensions 405 x
307 x 91 mm, was wrapped in a layer of PROBAN-treated cotton.
A double crib, comprising two cribs, each  weighing 63 ± 2 g

and consisting of ten soft-wood blocks of dimensions 80 x 12.5 x 12.5 mm was placed on the wrapped foam. Wood wool (3g) was placed in each crib. The wood wool was ignited and the course of combustion observed.

On testing the modified foam, the emission of flame and smoke ceased within 2 minutes of the cribs extinguishing.

By contrast, when the control foam was subjected to the crib test it burnt completely.

CLAIMS:

1. A method for the production of a flexible polyetherurethane foam by reacting a polymeric polyol component (said polyol component optionally containing a non-halogenated diol) and an organic polyisocyanate under foam-forming conditions, characterised in that the foam-forming reaction mixture also contains

(a) an isocyanate-reactive additive which remains in the finished foam and acts as a flame-retardant when said foam is exposed to a flame; and

(b) one or more non-isocyanate-reactive compounds of phosphorus and nitrogen which, when the foam is melted by exposure to a flame, cause the molten foam to intumesce and char.

2. A method according to Claim 1, characterised in that the additive (a) is a halogenated, unsaturated, low-molecular-weight diol (e.g. dibromobutene diol) or triol.

3. A method according to Claim 1 or 2, characterised in that the additive (a) replaces, partly or totally on a mole-for-mole basis, the non-halogenated diol forming part of the polymeric polyol component.

4. A method according to any one of Claims 1 to 3, characterised in that the additive (b) is a halogenated phosphate ester (e.g. tetrakis(2-chloroethyl)ethylene diphosphate) or an ammonium polyphosphate.

5. A method according to any one of Claims 1 to 4, characterised in that the foam-forming reaction mixture includes one or more additional flame-retardants (known per se) which exert a synergistic flame-retardant effect (in conjunction with the additive (b)) upon the finished foam (e.g. borax or a hydrated alumina).

European Patent Office

EUROPEAN SEARCH REPORT

0073937

EP 82 10 7120

## DOCUMENTS CONSIDERED TO BE RELEVANT

| Category | Citation of document with indication, where appropriate, of relevant passages | Relevant to claim |
|---|---|---|
| X | DE - A1 - 2 539 982 (GAF CORP.)<br>* claim 1 ; page 15, line 6 to page 19 *<br>--- | 1,2 |
| A | US - A - 3 933 693 (D.C. PRIEST et al.)<br>* column 1, line 37 to column 2, line 45 *<br>--- | 1,4,5 |
| A | US - A - 4 139 501 (B. RUDNER et al.)<br>* column 2, line 28 to column 5, line 35 *<br>--- | 1,4 |
| A | DE - A1 - 2 359 700 (HOECHST AG)<br>* claim 1 *<br>--- | 4 |
| A | US - A - 3 737 400 (S. KUMASAKA et al.)<br>* column 1, line 9 to column 2, line 65 *<br>----- | 5 |

**CLASSIFICATION OF THE APPLICATION (Int. Cl. 3)**

C 08 L 75/08
C 08 J 9/00
C 08 G 18/38
C 08 G 18/67
C 08 K 5/52
C 08 K 3/38
C 08 K 3/22
C 08 K 3/28

**TECHNICAL FIELDS SEARCHED (Int.Cl. 3)**

C 08 G 18/00
C 08 J 9/00
C 08 K 3/00
C 08 K 5/00
C 08 L 75/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 18-11-1982 | IDEZ |

EPO Form 1503.1 06.78